# EUROPEAN PATENT APPLICATION

(11) **EP 3 142 379 A1**
(43) Date of publication of application: **15.03.2017**
(21) Application number: 15789560.8
(22) Date of filing: 13.04.2015
(51) Int. Cl.: H04N 21/472

(54) **METHOD FOR BROWSING SERVICE CONTENT OF TERMINAL DEVICE, AND TERMINAL DEVICE**

(30) Priority: 05.05.2014 CN 201410186266
(71) Applicant: Startimes Communication Network Technology Co. Ltd, Beijing 100085 (CN)
(72) Inventor: WEN, Jiangtao, Beijing 100085 (CN); PANG, Yi, Beijing 100085 (CN); ZENG, Yixing, Beijing 100085 (CN); ZHANG, Liang, Beijing 100085 (CN)
(74) Representative: Horak, Michael
(86) International application number: PCT/CN2015/076409
(87) International publication number: WO 2015/169140

(57) **Abstract**

The present invention provides a terminal device and a method for browsing service content of the terminal, relating to the technical field of video live broadcasting, the method comprising: classifying service contents in the terminal device in advance and distributing channel numbers to the classifications in the reserved channel section; receiving a channel switching instruction inputted by the user, the channel switching instruction including channel number information of the classification to be switched; determining a target classification corresponding to a channel number of the classification to be switched, according to the channel number information; transmitting service content in the target classification to a display device, such that the display device displays the service content in the target classification. Thus the present invention can solve the problem in the prior art that it is very complicated to seek for service contents other than the live channel in the terminal device, and it is difficult to quickly switch to the service content of the needed application.

## Description

### TECHNICAL FIELD

The present invention relates to the technical field of video live broadcasting, in particular to a terminal device and a method for browsing service content of the terminal device.

### BACKGROUND

Currently, video live broadcasting technologies have been applied widely. Traditional video live broadcasting technologies generally transmit digital TV signals through Digital Video Broadcasting (DVB for short). DVB is an internationally recognized digital TV publicity standard. The DVB standard provides ways of wireless transmission such as Satellite TV, Cable TV, Terrestrial TV, Handheld TV, and etc. Currently different DVB standards are used to transmit digital TV signals all over the world. In addition, with the developlement of IP technologies and Internet technologies, IP network transmission-based live channels represented by Internet Protocol Television (IPTV for short) and Internet video have gradually emerged. The above types of live channels transmitted by different networks are collectively called "live channels" in the present invention. Live channels can conduct broadcasting through various terminals such as a smart TV, a mobile phone, a tablet PC and etc.

With the diversity of service contents of digital TVs, a terminal device, such as a digital TV set top box (STB) and etc., as a platform, can provide a user with more service contents, such as video on demand content broadcasting by using a Video On Demand (VOD for short) technology, media content based on a USB hardware interface of the STB, game content, and etc.

Currently, when the user is watching a live channel, if he needs to apply other service content except the content of the live channel, he needs to firstly retreat from the live channel and searches seriatim the needed service content in a display interface of the terminal device. Thus it can be seen that it is very complicated to seek for service contents other than the live channel in the current terminal device, and it is difficult to quickly switch to the service content of the needed application.

### SUMMARY OF THE DISCLOSURE

Embodiments of the present invention provide a terminal device and a method for browsing service content of the terminal device, to solve the problem in the prior art that it is very complicated to seek for service contents other than the live channel in the terminal device, and it is difficult to quickly switch to the service content of the needed application.

In order to achieve the above purpose, the present invention adopts the following technical solution:
A method for browsing service content of a terminal device, comprising:
   classifying service contents in the terminal device in advance, and distributing channel numbers to the classifications in the reserved channel section;
   receiving a channel switching instruction inputted by the user, the channel switching instruction including channel number information of the classification to be switched;
   determining a target classification corresponding to a channel number of the classification to be switched, according to the channel number information;
   transmitting service content in the target classification to a display device, such that the display device displays the service content in the target classification.

Specifically, the service content includes: VOD content, USB hardware interface media content and application program content; the application program content includes electronic game subcontent, TV broadcast subcontent, public service information subcontent and government affairs information subcontent; the electronic game subcontent includes multiple electronic games.

In one embodiment, classifying service contents in the terminal device in advance and distributing channel numbers to the classifications in the reserved channel section includes:
receiving tags of VOD contents sent by a front-end server;
classifying the VOD contents according to the tags of the preset VOD contents, and distributing channel numbers to the VOD classifications.

In one embodiment, classifying service contents in the terminal device in advance and distributing channel numbers to the classifications in the reserved channel section includes:
regarding the USB hardware interface media content as one classification, and distributing one channel number to the USB hardware interface media content.

In one embodiment, classifying service contents in the terminal device in advance and distributing channel numbers to the classifications in the reserved channel section includes:
regarding the subcontents in the application program content as one classification respectively, and distributing one channel number to each of the classifications corresponding to the subcontents.

In one embodiment, classifying service contents in the terminal device in advance and distributing channel numbers to the classifications in the reserved channel section further includes:
receiving tags of electronic games sent by the front-end server;
classifying the electronic games according to the tags of the preset multiple electronic games, and distributing channel numbers to the classifications of the electronic games.

In one embodiment, classifying service contents in the terminal device in advance and distributing channel numbers to the classifications in the reserved channel section includes:
regarding the electronic games stored in local as a user-defined classification, and distributing a channel number to the user-defined classification.

A terminal device, comprising:
a classification unit for classifying service contents in the terminal device in advance, and distributing channel numbers to the classifications in the reserved channel section;
an instruction reception unit for receiving a channel switching instruction inputted by the user, the channel switching instruction including channel number information of the classification to be switched;
a determination unit for determining a target classification corresponding to a channel number of the classification to be switched, according to the channel number information received by the instruction reception unit;
a transmission unit for transmitting service content in the target classification to a display device, such that the display device displays the service content in the target classification.

Specifically, the service content in the terminal device includes: VOD content, USB hardware interface media content and application program content; the application program content includes electronic game subcontent, TV broadcast subcontent, public service information subcontent and government affairs information subcontent; the electronic game subcontent includes multiple electronic games.

In one embodiment, the classification unit is used for:
receiving tags of VOD contents sent by a front-end server;
classifying the VOD contents according to the tags of the preset VOD contents, and distributing channel numbers to the VOD classifications.

In one embodiment, the classification unit is used for:
regarding the USB hardware interface media content as one classification, and distributing one channel number to the USB hardware interface media content.

In one embodiment, the classification unit is used for:
regarding the subcontents in the application program content as one classification respectively, and distributing one channel number to each of the classifications corresponding to the subcontents.

Further, the classification unit is also used for:
receiving tags of electronic games sent by the front-end server;
classifying the electronic games according to the tags of the preset multiple electronic games, and distributing channel numbers to the classifications of the electronic games.

In one embodiment, the classification unit is used for:
regarding the electronic games stored in local as a user-defined classification, and distributing a channel number to the user-defined classification.

The terminal device and the method for browsing service content of the terminal device provided by the embodiments of the present invention can classify the service contents in the terminal device in advance, and distribute channel numbers to the classifications in the reserved channel section, and afterwards receive a channel switching instruction inputted by the user, the channel switching instruction including channel number information of the classification to be switched; can determine a target classification corresponding to a channel number of the classification to be switched, according to the channel number information, and transmit service content in the target classification to a display device, such that the display device displays the service content in the target classification. In this way, it is possible to directly switch to the service content corresponding to the classification to be switched through the channel number information in the channel switching instruction, so as to solve the problem in the prior art that it is very complicated to seek for service contents other than the live channel in the terminal device, and it is difficult to quickly switch to the service content of the needed application.

### BRIEF DESCRIPTIONS OF THE DRAWINGS

In order to more clearly explain the embodiments of the present invention or the technical solution in the prior art, drawings that need to be used in the embodiments or prior art will be simply introduced below, obviously the drawings in the following description are merely some examples of the present invention, for persons ordinarily skilled in the art, it is also possible to obtain other drawings according to these drawings without making creative efforts.
Fig. 1 is a flowchart of a method for browsing service content of a terminal device provided in the embodiments of the present invention;
Fig. 2 is a schematic diagram of a display interface of the terminal device provided by the embodiments of the present invention;
Fig. 3 is a schematic diagram of structural frame of channel switching in the embodiments of the present invention;
Fig. 4 is a schematic diagram of channel switching in the embodiments of the present invention;
Fig. 5 is a schematic diagram of structure of the terminal device provided by the embodiments of the present invention.

### DETAILED DESCRIPTIONS

Hereinafter the technical solution in the embodiments of the present invention will be described clearly and integrally in combination with the accompanying drawings in the embodiments of the present invention, and obviously the described embodiments are merely part of the embodiments, not all of the embodiments. Based on the embodiments of the present invention, all other embodiments that are obtained by persons skilled in the art without making creative efforts fall within the protection scope of the present invention.

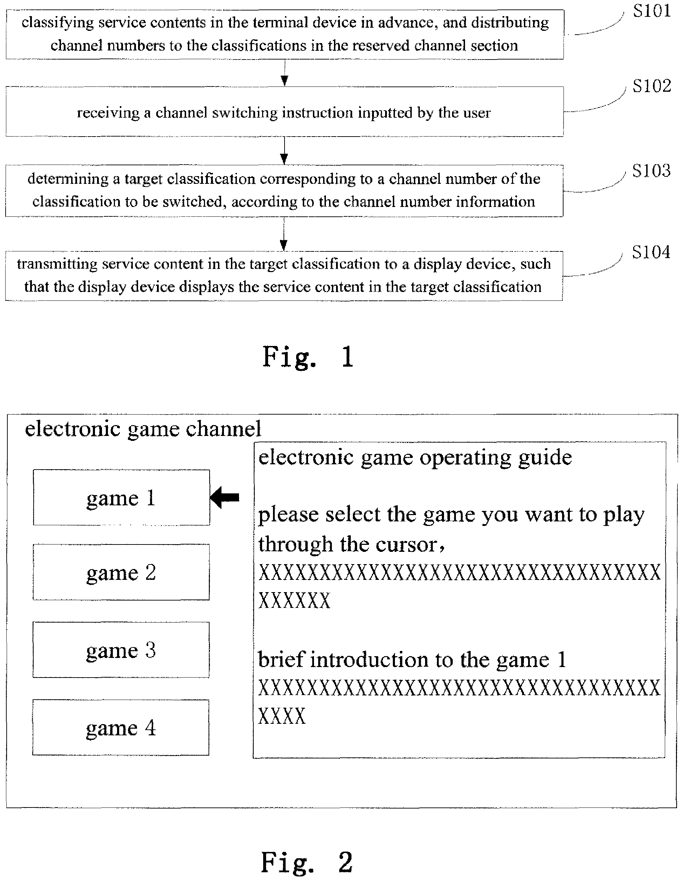

As shown in Fig. 1, a method for browsing service content of a terminal device provided in the embodiments of the present invention includes:
a step 101 of classifying service contents in the terminal device in advance, and distributing channel numbers to the classifications in the reserved channel section.

A step 102 of receiving a channel switching instruction inputted by the user.

Wherein the channel switching instruction includes channel number information of the classification to be switched.

A step 103 of determining a target classification corresponding to a channel number of the classification to be switched, according to the channel number information.

A step 104 of transmitting service content in the target classification to a display device, such that the display device displays the service content in the target classification.

It is worth noting that, the execution subject of the embodiments of the present invention is a terminal device, which can be a terminal that can process content of a live channel, such as an STB, a mobile phone, a computer and etc., the display device can be a display device of a TV, a mobile phone and a computer, but not limited to this.

The method for browsing service content of the terminal device provided by the embodiments of the present invention can classify the service contents in the terminal device in advance, and distribute channel numbers to the classifications in the reserved channel section, and afterwards receive a channel switching instruction inputted by the user, the channel switching instruction including channel number information of the classification to be switched; can determine a target classification corresponding to a channel number of the classification to be switched, according to the channel number information, and transmit service content in the target classification to a display device, such that the display device displays the service content in the target classification. In this way, it is possible to directly switch to the service content corresponding to the classification to be switched through the channel number information in the channel switching instruction, so as to solve the problem in the prior art that it is very complicated to seek for service contents other than the live channel in the terminal device, and it is difficult to quickly switch to the service content of the needed application.

It is worth noting that, the service content in the embodiments of the present invention can include: VOD content, USB hardware interface media content and application program content; the application program content can include electronic game subcontent, TV broadcast subcontent, public service information subcontent and government affairs information subcontent, but not limited to this. The electronic game subcontent can include multiple electronic games.

In one embodiment, classifying service contents in the terminal device in advance and distributing channel numbers to the classifications in the reserved channel section can be realized through the following method:
receiving tags of VOD contents sent by a front-end server;
classifying the VOD contents according to the tags of the preset VOD contents, and distributing channel numbers to the VOD classifications.

The tags of the above VOD content can be set according to different types of VOD content, for example, the VOD content can include high-definition movies, TV replaying, entertainment on demand, and etc., therefore the tags of the VOD content correspondingly can be "high-definition movies", "TV replaying", "entertainment on demand".

The above-described reserved channel section belongs to a channel section that rates equally to a live TV channel, and includes multiple reserved channel numbers. For example, the channel numbers corresponding to the channel section of the live TV channel are 001-100, the channel numbers of the reserved channel section are 101-200, but not limited to this.

In one embodiment, classifying service contents in the terminal device in advance and distributing channel numbers to the classifications in the reserved channel section can be realized through the following method:
regarding the USB hardware interface media content as one classification, and distributing one channel number to the USB hardware interface media content.

Generally a USB hardware interface connected to a USB storage device is disposed on a terminal device such as a STB, the USB storage device generally stores USB hardware interface media content, such as a picture file, a video file, and etc.

In one embodiment, classifying service contents in the terminal device in advance and distributing channel numbers to the classifications in the reserved channel section can be realized through the following method:
regarding the subcontents in the application program content as one classification respectively, and distributing one channel number to each of the classifications corresponding to the subcontents.

For example, contents such as electronic game subcontent, TV broadcast subcontent, public service information subcontent, government affairs information subcontent, and etc. each corresponds to one channel number respectively.

For example, as shown in Fig. 2, when displaying the electronic game content, it is practicable to display a user's guide of an electronic game platform, and to provide introduction and entry for each electronic game. The electronic game channel is an interactive channel, the user can select a game 1 that he wants to play in the channel and enters the game, through controlling of a remote controller.

In one embodiment, classifying service contents in the terminal device in advance and distributing channel numbers to the classifications in the reserved channel section can also be realized through the following method:
receiving tags of electronic games sent by the front-end server;
classifying the electronic games according to the tags of the preset multiple electronic games, and distributing channel numbers to the classifications of the electronic games.

If the electronic game subcontent includes many electronic games, then the electronic games can be classified, tags of the above electronic games can be determined according to types of the electronic games. For example, the types of the electronic games can include action adventure, cosplay and simulation, then tags of corresponding electronic games can be "Action Adventure", "Cosplay" and "Simulation". Each type of the electronic games can correspond to one channel number.

In one embodiment, classifying service contents in the terminal device in advance and distributing channel numbers to the classifications in the reserved channel section can also be realized through the following method:
regarding the electronic games stored in local as a user-defined classification, and distributing a channel number to the user-defined classification.

In order for the user of the terminal device to conveniently use the terminal device, it is possible to regard the electronic games stored in local as one user-defined classification. In addition, it is also possible to regard application programs that the user of the terminal device used in the past as one user-defined classification, for example, regard electronic games that the user of the terminal device played in the past as one user-defined classification.

In one embodiment, receiving a channel switching instruction inputted by the user can be directly receiving a channel number, or can be receiving a switching instruction to a previous channel or the next channel. For example, currently the user is watching a live channel program having a channel number 100, when the user wants to apply the VOD content with the channel number 101, the user inputs 101 by an input device such as a remote controller or a keyboard or the like, or can switch to the VOD content with the channel number 101 by directly transmitting an instruction to switch to the next channel.

Moreover, by receiving the channel switching instruction inputted by the user, it is possible to realize direct switching from a live channel to a service content channel, direct switching from the service content channel to the live channel, and switching between service content channels, or switching between live channels.

For example, when the user proceeds the game 1, he can input a channel number of the USB hardware interface media content by pressing a number key on the remote controller, so as to enter the USB hardware interface media content channel, which can display picture files and the like in the USB device.

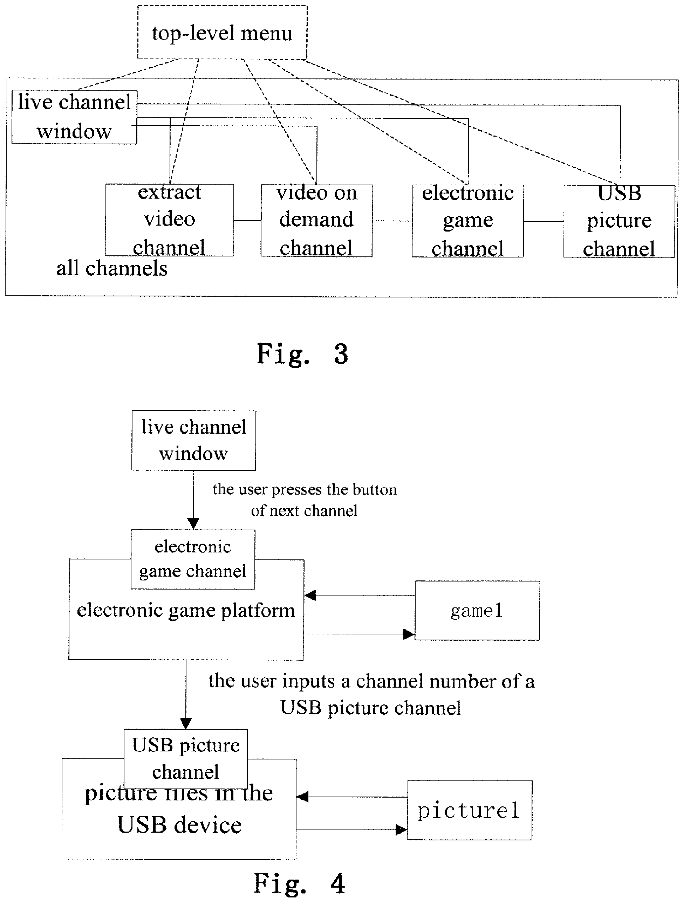

As shown in Fig. 3, a structural frame of channel switching of the embodiments of the present invention is illustrated. Firstly, service contents other than a live channel can be integrated within a live channel window, i.e., the above service contents can be displayed directly by inputting channel numbers in the live channel window. After the above service contents are classified, channel numebrs may be distributed to the service contents in the reserved channel section, thereby classifying submenus that are discrete previously in the top-level menu and the live channel as the same level. The channel corresponding to the service content and the live channel can have independent channel numbers. In this way, the live channel and the channel corresponding to the service content can constitute a channel network, such that the user can easily traverse the service content and the live channel that the terminal device can provide. In Fig. 3, the live channel window can display the live channel, and can display a service content entrance, such as an electronic game entrance, a VOD entrance, and etc. The above-described live channel and the channel corresponding to the service content can conduct channel switching to each other, and moreover, the live channels and the channels corresponding to the service contents can separately conduct channel switching to each other. Moreover, as shown in Fig. 3, it is still possible to access the service contents from the top-level menus, i.e., it is possible to select to enter the channels corresponding to the service contents through the top-level menus.

Moreover, as shown in Fig. 4, an example of channel switching is illustrated, and it is worth noting that, the example is merely one of the examples of the method for browsing service content of the terminal device claimed in the present application. Firstly, the user enter the live channel window, he can switch channel (for example, pressing the button of next channel) by a remote controller to the adjacent channel, such as an electronic game channel, and at this time the user can see the display within the electronic game channel, an operating guide of the game platform, introductions and entrances of various games, and etc. The game channel is an interactive channel, the user can select a game 1 that he wants to play in the channel and enters the game, through controlling of a remote controller. After the game is over, the user retreats from the game 1 to return back to the channel, inputs the channel number of a USB picture channel by pressing a number key on the remote controller, so as to enter the USB picture channel which directly displays picture files in the connected USB device. Also, the channel is an interactive channel, the user can select a picture 1 that he hopes to view through the remote controller, and retreats and returns back to the channel after finishing viewing, and continues the subsequent similar operations. Interaction between the channels corresponding to the service contents is not limited to this example, and other similar examples can also explain the method for browsing the service content of the terminal device claimed in the present invention and here will not be repeated.

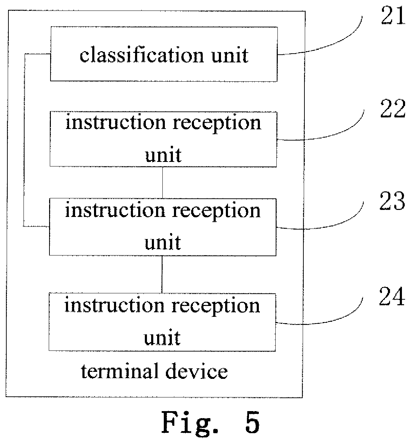

Correspondingly to the method for browsing the service content of the terminal device as shown in Fig. 1, as shown in Fig. 5, the terminal device provided by the embodiments of the present invention includes: a classification unit 21, an instruction reception unit 22, a determination unit 23 and a transmission unit 24.

The classification unit 21 can classify service contents in the terminal device in advance, and distribute channel numbers to the classifications in the reserved channel section.

The instruction reception unit 22 can receive a channel switching instruction inputted by the user, the channel switching instruction including channel number information of the classification to be switched.

The determination unit 23 can determine a target classification corresponding to a channel number of the classification to be switched, according to the channel number information received by the instruction reception unit 22.

The transmission unit 24 can transmit service content in the target classification to a display device, such that the display device displays the service content in the target classification.

It is worth noting that, the service content in the terminal device includes: VOD content, USB hardware interface media content and application program content; the application program content includes electronic game subcontent, TV broadcast subcontent, public service information subcontent and government affairs information subcontent; the electronic game subcontent includes multiple electronic games.

In one embodiment, the classification unit 21 can receive tags of VOD contents sent by a front-end server, and classify the VOD contents according to the tags of the preset VOD contents, and distribute channel numbers to the classifications of the VOD.

In one embodiment, the classification unit 21 can regard the USB hardware interface media content as one classification, and distribute one channel number to the USB hardware interface media content.

In one embodiment, the classification unit 21 can regard the subcontents in the application program content as one classification respectively, and distribute one channel number to each of the classifications corresponding to the subcontents.

Further, the classification unit can also receive tags of electronic games sent by the front-end server, and classify the electronic games according to the tags of the preset multiple electronic games, and distribute channel numbers to the classifications of the electronic games.

In one embodiment, the classification unit 21 can regard the electronic games stored in local as a user-defined classification, and distribute a channel number to the user-defined classification.

It is worth noting that, the terminal device of the embodiments of the present invention can be a terminal that can process content of a live channel, such as an STB, a mobile phone, a computer and etc.

Specific implementation of the terminal device provided by the embodiments of the present invention can refer to the above method examples in Fig. 1, and here will not be repeated.

The terminal device provided by the embodiments of the present invention can classify the service contents in the terminal device in advance, and distribute channel numbers to the classifications in the reserved channel section, and afterwards receive a channel switching instruction inputted by the user, the channel switching instruction including channel number information of the classification to be switched; can determine a target classification corresponding to a channel number of the classification to be switched, according to the channel number information, and transmit service content in the target classification to a display device, such that the display device displays the service content in the target classification. In this way, it is possible to directly switch to the service content corresponding to the classification to be switched through the channel number information in the channel switching instruction, so as to solve the problem in the prior art that it is very complicated to seek for service contents other than the live channel in the terminal device, and it is difficult to quickly switch to the service content of the needed application.

Persons skilled in the art shall understand that, the embodiments of the present invention can be provided as a method, a system or a computer program product. Therefore, the present invention can adopt the forms of a full hardware example, a full software example, or combination of a software example and a hardware example. Moreover, the present invention can adopt the form of a computer program product that is implemented on one or more computer-usable storage medium (including but not limited to a disk memory, a CD-ROM, an optical memory, and etc.) including computer-usable program codes.

The invention is described with reference to flow diagrams and/or block diagrams of the method, the device (system) and the computer program product according to the embodiment of the invention. It should be understood that each flow and/or block in the flow diagrams and/or block diagrams, and the combination of the flows and/or blocks in the flow diagrams and/or block diagrams can be achieved by computer program commands. These computer program commands can be provided to a CPU of a general-purpose computer, a special-purpose computer, an embedded processor or other programmable data processing device to produce a machine, so that a device for achieving functions designated in one or more flows in the flow diagrams and/or one or more blocks in the block diagrams can be generated by the command executed by the CPU of the computer or other programmable data processing device.

These computer program commands can also be stored in a computer-readable memory that can guide a computer or other programmable data processing device to operate in a special way, so that the command stored in the computer-readable memory generates a manufactured product including a command device which achieves functions designated in one or more flows in the flow diagrams and/or one or more blocks in the block diagrams.

These computer program commands can also be loaded on a computer or other programmable data processing device, on which a series of operation steps are executed to generate processing achieved by the computer, so that the command executed on the computer or other programmable data processing device is provided for being used in the steps of achieving functions designated in one or more flows in the flow diagrams and/or one or more blocks in the block diagrams.

The invention adopts specific embodiments to explain the principle and implementation way of the invention. The above embodiments are described merely for helping to understand the method and core concept of the invention; in addition, a person skilled in the art can, on the basis of the concept of the invention, make modifications to both of the specific embodiments and application scope. In conclusion, contents disclosed herein should not be understood as limitation to the invention.

## Claims

1. A method for browsing service content of a terminal device, **characterized in** comprising:
classifying service contents in the terminal device in advance, and distributing channel numbers to the classifications in the reserved channel section;
receiving a channel switching instruction inputted by the user, the channel switching instruction including channel number information of the classification to be switched;
determining a target classification corresponding to a channel number of the classification to be switched, according to the channel number information;
transmitting service content in the target classification to a display device, such that the display device displays the service content in the target classification.

2. The method for browsing service content of a terminal device according to claim 1, **characterized in that** the service content comprises: VOD content, USB hardware interface media content and application program content; the application program content comprises: electronic game subcontent" TV broadcast subcontent, public service information subcontent and government affairs information subcontent; the electronic game subcontent comprises multiple electronic games.

3. The method for browsing service content of a terminal device according to claim 2, **characterized in that** the classifying service contents in the terminal device in advance and distributing channel numbers to the classifications in the reserved channel section comprises:

4. The method for browsing service content of a terminal device according to claim 2, **characterized in that** the classifying service contents in the terminal device in advance and distributing channel numbers to the classifications in the reserved channel section comprises:
regarding the USB hardware interface media content as one classification, and distributing one channel number to the USB hardware interface media content.
receiving tags of VOD contents sent by a front-end server;
classifying the VOD contents according to the tags of the preset VOD contents, and distributing channel numbers to the VOD classifications.

5. The method for browsing service content of a terminal device according to claim 2, **characterized in that** the classifying service contents in the terminal device in advance and distributing channel numbers to the classifications in the reserved channel section comprises:
regarding the subcontents in the application program content as one classification respectively, and distributing one channel number to each of the classifications corresponding to the subcontents.

6. The method for browsing service content of a terminal device according to claim 5, **characterized in that** the classifying service contents in the terminal device in advance and distributing channel numbers to the classifications in the reserved channel section further comprises:
receiving tags of electronic games sent by the front-end server;
classifying the electronic games according to the tags of the preset multiple electronic games, and distributing channel numbers to the classifications of the electronic games.

7. The method for browsing service content of a terminal device according to claim 2, **characterized in that** the classifying service contents in the terminal device in advance and distributing channel numbers to the classifications in the reserved channel section comprises:
regarding the electronic games stored in local as a user-defined classification, and distributing a channel number to the user-defined classification.

8. A terminal device, **characterized in** comprising:
a classification unit for classifying service contents in the terminal device in advance, and distributing channel numbers to the classifications in the reserved channel section;
an instruction reception unit for receiving a channel switching instruction inputted by the user, the channel switching instruction including channel number information of the classification to be switched;
a determination unit for determining a target classification corresponding to a channel number of the classification to be switched, according to the channel number information received by the instruction reception unit;
a transmission unit for transmitting service content in the target classification to a display device, such that the display device displays the service content in the target classification.

9. The terminal device according to claim 8, **characterized in that** the service content in the terminal device comprises: VOD content, USB hardware interface media content and application program content; the application program content comprises: electronic game subcontent, TV broadcast subcontent, public service information subcontent and government affairs information subcontent; the electronic game subcontent comprises multiple electronic games.

10. The terminal device according to claim 9, **characterized in that** the classification unit is used for:
receiving tags of VOD contents sent by a front-end server;
classifying the VOD contents according to the tags of the preset VOD contents, and distributing channel numbers to the VOD classifications.

11. The terminal device according to claim 9, **characterized in that** the classification unit is also used for:regarding the USB hardware interface media content as one classification, and distributing one channel number to the USB hardware interface media content.

12. The terminal device according to claim 9, **characterized in that** the classification unit is used for:
regarding the subcontents in the application program content as one classification respectively, and distributing one channel number to each of the classifications corresponding to the subcontents.

13. The terminal device according to claim 9, **characterized in that** the classification unit is also used for:
receiving tags of electronic games sent by the front-end server;
classifying the electronic games according to the tags of the preset multiple electronic games, and distributing channel numbers to the classifications of the electronic games.

14. The terminal device according to claim 9, **characterized in that** the classification unit is used for:
regarding the electronic games stored in local as a user-defined classification, and distributing a channel number to the user-defined classification.
